(19) Europäisches Patentamt
European Patent Office
Office européen des brevets

(11) **EP 4 539 602 B1**

(12) **EUROPÄISCHE PATENTSCHRIFT**

(45) Veröffentlichungstag und Bekanntmachung des Hinweises auf die Patenterteilung:
**29.04.2026 Patentblatt 2026/18**

(21) Anmeldenummer: **24205442.7**

(22) Anmeldetag: **09.10.2024**

(51) Internationale Patentklassifikation (IPC):
**H05B 6/64** *(2006.01)* **F24C 7/08** *(2006.01)*

(52) Gemeinsame Patentklassifikation (CPC):
**H05B 6/6452; F24C 7/085;** G01K 2207/06

(54) **KERNTEMPERATURFÜHLER UND KOMBINATIONSGARGERÄT MIT KERNTEMPERATURFÜHLER**

CORE TEMPERATURE SENSOR AND COMBINATION COOKING APPLIANCE WITH CORE TEMPERATURE SENSOR

CAPTEUR DE TEMPÉRATURE À COEUR ET APPAREIL DE CUISSON COMBINÉ AVEC CAPTEUR DE TEMPÉRATURE À COEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.10.2023 DE 102023127961**

(43) Veröffentlichungstag der Anmeldung:
**16.04.2025 Patentblatt 2025/16**

(73) Patentinhaber: **Rational Aktiengesellschaft 86899 Landsberg am Lech (DE)**

(72) Erfinder:
• **Koenen, Christian
86899 Landsberg am Lech (DE)**
• **Selig, Peter
86899 Landsberg am Lech (DE)**

(74) Vertreter: **Prinz & Partner mbB
Patent- und Rechtsanwälte
Rundfunkplatz 2
80335 München (DE)**

(56) Entgegenhaltungen:
**CN-A- 112 179 388 DE-A1- 102020 104 743
FR-A1- 2 262 290**

**Beschreibung**

Die Erfindung betrifft einen Kerntemperaturfühler mit einer Mikrowellenfalle und ein Gargerät mit einem Kerntemperaturfühler.

In Profi- beziehungsweise Großküchen werden Kombinationsgargeräte verwendet, die in der Lage sind, ein Gargut in einem Garraum des Kombinationsgargeräts auf unterschiedliche Weise garen zu können. Dabei kommt neben den klassischen Garverfahren, die mit Heißluft und/oder Dampf arbeiten, bei modernen Kombinationsgargeräten auch häufig Mikrowellenstrahlung zum Einsatz. Die Energie der Mikrowellenstrahlung kann zum Garen des Garguts alleine oder in Kombination mit den vorgenannten Verfahren genutzt werden. Für das Einspeisen von Mikrowellen in den Garraum können Magnetrons oder Halbleiterbauteile als Mikrowellenquellen verwendet werden.

Um bestmögliche Ergebnisse beim Garen eines Garguts zu erzielen, ist es von Vorteil, den Garprozess möglichst präzise zu überwachen, um bei Bedarf bestimmte Garparameter wie Temperatur, Luftfeuchtigkeit und/oder Garzeit zu verändern.

In modernen Gargeräten werden hierfür unter anderem Kerntemperaturfühler verwendet. Ein Kerntemperaturfühler weist typischerweise eine mit Temperatursensoren ausgestattete Messlanze auf, die vor Beginn des Garprozesses in das Gargut eingesteckt wird. Die Temperatursensoren messen während des Garvorgangs die im Kern des Garguts vorliegenden Kerntemperaturen und übermitteln diese an eine Auswerteeinheit des Gargeräts. Die gemessenen Kerntemperaturen ermöglichen es, den Gargrad des Garguts zu ermitteln, sodass der Garvorgang auf Basis dieser Informationen geregelt werden kann, um das gewünschte Garergebnis zu erzielen.

Im Mikrowellenbetrieb ergibt sich beim Einsatz des Kerntemperaturfühlers das Problem, dass die Messlanze als eine Antenne wirken kann, welche die eingespeisten Mikrowellen empfängt. Dies führt zu ungewünschten elektrischen Strömen innerhalb des Kerntemperaturfühlers, was zu einer Temperaturerhöhung im Kerntemperaturfühler führen kann. Hierdurch kann sich der Kerntemperaturfühler so stark aufheizen, dass der Kerntemperaturfühler beschädigt wird. Dies kann insbesondere dann auftreten, wenn sich der Kerntemperaturfühler in einer Parkposition befindet, also nicht in das Gargut eingesteckt ist.

Sofern der Kerntemperaturfühler in das Gargut eingesteckt ist, kann das Gargut lokal im Bereich der Messlanze überproportional erwärmt werden. Auch können durch die ungewollte Erhitzung des Kerntemperaturfühlers, insbesondere der Temperatursensoren, die gemessenen Temperaturen verfälscht werden.

Insofern ist es die Aufgabe der vorliegenden Erfindung, eine Vorrichtung bereitzustellen, um im eingeschalteten Mikrowellenbetrieb eines Kombinationsgargeräts, Beschädigungen am Kerntemperaturfühler, eine ungewünschte Erwärmung des Garguts und fehlerhafte Messungen zu verhindern.

DE 10 2020 104743 A1 offenbart einen Kerntemperaturfühler gemäß dem Oberbegriffs des Anspruches 1.

Die Aufgabe wird erfindungsgemäß gelöst durch einen Kerntemperaturfühler für ein Kombinationsgargerät zum Garen von Gargut, mit einem Messabschnitt und einem Griffabschnitt. Ferner ist ein Kontaktierungsrohr vorgesehen, das sich zumindest teilweise in den Griffabschnitt hinein erstreckt und ein griffseitiges Ende hat, das dem Griffabschnitt zugewandt ist. In dem Kontaktierungsrohr ist ein Kabel geführt, das sich vom Griffabschnitt aus in den Messabschnitt hineinerstreckt. Das Kabel weist im Griffabschnitt einen entmantelten Bereich auf, in dem das Kontaktierungsrohr mit dem Kabel eine Kontaktstelle ausbildet. Die Kontaktstelle weist zum griffseitigen Ende einen Abstand auf, der einer elektrischen Länge der Mikrowellenstrahlung im Griffabschnitt entspricht, die kürzer als oder gleich ein Viertel der Wellenlänge der im Kombinationsgargerät verwendeten Mikrowellenstrahlung ist.

Dadurch ist gewährleistet, dass das griffseitige Ende des Kontaktierungsrohrs während des Mikrowellenbetriebs des Kombinationsgargeräts in einem Minimum des durch die Mikrowellenstrahlung erzeugten elektromagnetischen Feldes (nachfolgend E-Feld genannt) liegt, also an einer Position im elektromagnetischen Feld, in dem die Feldstärke ein lokales oder ein globales Minimum aufweist. Damit wird an dieser Position der Stromfluss in das griffseitige Ende verringert, wodurch der Energieeintrag in den Kerntemperaturfühler insgesamt reduziert wird. Ein geringerer Energieeintrag führt wiederum dazu, dass sich der Kerntemperaturfühler, insbesondere der Griffabschnitt, weniger stark erwärmt, wodurch die Haltbarkeit des Griffs auf einfache Weise verlängert wird. Da die Standzeit eines Kerntemperaturfühlers wesentlich von der Haltbarkeit des Griffabschnitts bestimmt wird, weist dadurch der Kerntemperaturfühler insgesamt eine verbesserte Standzeit auf.

Mit einem Kontaktierungsrohr ist ein Rohrelement gemeint, das die Form eines länglichen, hohlzylindrischen Körpers aufweist, sodass in diesem ein Kabel aufgenommen und geführt werden kann. Insbesondere ist das Kontaktierungsrohr ein Kreiszylinder, also im Querschnitt kreisrund.

Unter einem griffseitigen Ende ist das eine Ende des Kontaktierungsrohrs gemeint, das dem Griffabschnitt zugewandt ist, also dem Messabschnitt abgewandt ist. Dementsprechend ist die Kontaktstelle vom griffseitigen Ende aus gesehen in Richtung Messabschnitt angeordnet.

Unter einem "Messabschnitt" ist derjenige Bereich gemeint, der dazu dient, im eingesteckten Zustand die Temperatur in einem Gargut zu messen. Beispielsweise kann dafür im Messabschnitt mindestens ein Temperatursensor vorgesehen sein. Der Messabschnitt muss hierfür nicht vollständig in das Gargut eingesteckt sein. Auch wird der Messabschnitt als Messlanze bezeichnet.

Unter dem Begriff "Griffabschnitt" ist derjenige Bereich des Kerntemperaturfühlers zu verstehen, an dem der Kerntemperaturfühler von einem Benutzer gehalten werden kann. Dazu kann der Griffabschnitt beispielsweise eine ergonomisch an die Hand angepasste Form aufweisen, sodass der Kerntemperaturfühler im Garraum auf einfache Weise gehandhabt werden kann.

Unter Wellenlänge ist insbesondere die Wellenlänge im Vakuum (oder näherungsweise in Luft) zu verstehen.

Unter elektrischer Länge ist die Strecke zu verstehen, die eine elektromagnetische Welle in einem Ausbreitungsmedium zurücklegt, bspw. im Griffabschnitt und/oder im Messabschnitt. Dies ist insbesondere dann der Fall, wenn die Feldlinien vollständig in dem Material liegen, z.B. bei einer koaxialen Struktur, insbesondere zwischen einer Geflechtschirmung und dem Kontaktierungsrohr.

Aufgrund der dielektrischen Eigenschaften in den beiden Abschnitten angeordneten Materialien kann die elektrische Länge von der Länge bzw. Strecke abweichen, die die elektromagnetische Welle im Vakuum (in derselben Zeit) zurücklegen würde, welche auch als mechanische Länge bezeichnet wird. Anders ausgedrückt ist die elektrische Länge in Abhängigkeit von der Permittivität und gegebenenfalls der Permeabilität des Ausbreitungsmediums kleiner oder höchstens gleich der Strecke im Vakuum. Mathematisch kann der Zusammenhang wie folgt ausgedrückt werden:

$$l_{el} = l_{mech} \cdot \sqrt{\mu_r \varepsilon_r} \, ,$$

wobei $l_{el}$ die elektrische Länge, $l_{mech}$ die mechanische Länge, $\mu_r$ die relative Permeabilitätszahl und $\varepsilon_r$ die relative Permittivität sind, was dem Dielektrikum entspricht. Das Produkt der relativen Permeabilitätszahl $\mu_r$ und der relativen Permittivität $\varepsilon_r$ ist für die gängigen Werkstoffen größer als 1. Bei Vakuum ist das Produkt exakt 1, wohingegen es bei Luft in etwa 1 ist.

Insbesondere kann beim Griffabschnitt des Kerntemperaturfühlers eine Volumen-(Feldstärke)-gewichtete relative Permittivität $\varepsilon_r$ und eine Volumen-(Feldstärke)-gewichtete relative Permeabilitätszahl $\mu_r$ herangezogen werden. Die Feldlinien liegen nur zum Teil im Griff- bzw. Messabschnitt vor, da ein anderer Teil in der Luft vorliegt.

Der Griffabschnitt, also sämtliche darin angeordneten Materialien, entspricht der elektrischen Länge der Mikrowellenstrahlung im Griffabschnitt, was bedeutet, dass die elektromagnetischen Wellen der Mikrowellenstrahlung, also die Mikrowellen, im Griffabschnitt die elektrische Länge haben, wenigstens einem Viertel der Wellenlänge der Mikrowellenstrahlung entspricht. In Abhängigkeit des Materials im Griffabschnitt ist der Abstand zwischen der Kontaktstelle und dem griffseitigen Ende kürzer als die elektrische Länge. Je größer die relative Permeabilitätszahl des verwendeten Materials im Griffabschnitt, desto kürzer kann der Abstand sein, um dennoch sicherzustellen, dass die elektrische Länge der Mikrowellenstrahlung im Griffabschnitt kleiner als ein Viertel der Wellenlänge der Mikrowellenstrahlung (im Vakuum) ist. Dies liegt an dem Einfluss der Permeabilität und der Permittivität, wie vorstehend dargelegt.

Insofern kann unter der elektrischen Länge die zurückgelegte Strecke im Vakuum mit einem Verkürzungsfaktor verstanden werden. Der Verkürzungsfaktor kommt dadurch zustande, dass sich die elektromagnetische Welle, also die Mikrowelle,) in einem Ausbreitungsmedium mit einer anderen Permittivität (und Permeabilität) als Vakuum ausbreitet, bspw. im Material im Griffabschnitt. Der Griffabschnitt stellt nämlich für in diesen eintretenden elektromagnetischen Strahlung ein Dielektrikum dar. Dieser physikalische Zusammenhang wird durch den Verkürzungsfaktor ausgedrückt, der vom Ausbreitungsmedium abhängt bzw. im Falle von Vakuum "1" beträgt.

Als Resultat kann der Abstand zwischen der Kontaktstelle und dem griffseitigen Ende entsprechend kürzer sein, nämlich um den Verkürzungsfaktor, sofern ein anderes Material (Ausbreitungsmedium) im Griffabschnitt, insbesondere innerhalb der Nut, als im Garraum vorhanden ist, bspw. das Material vom Griff, dem Kontaktierungsrohr, dem Kabel oder sonstigen Komponenten im Griffabschnitt.

Insofern gilt prinzipiell der folgende Zusammenhang:

$$\frac{1}{4}\lambda \cdot F_{Griffabschnitt} \leq d_{Abstand}$$

, wobei $\lambda$ der Wellenlänge der im Garraum verwendeten Mikrowellenstrahlung (im Vakuum) entspricht und $d_{Abstand}$ der Abstand zwischen der Kontaktstelle und dem griffseitigen Ende und $F_{Griffabschnitt}$ den Verkürzungsfaktor vom Griffabschnitt darstellen, wobei der Verkürzungsfaktor durch $\frac{1}{\sqrt{\mu_r \varepsilon_r}}$ ausgedrückt sein kann.

Um eine besonders geringen Energieeintrag in den Griffabschnitt zu gewährleisten, ist es bevorzugt, dass die elektrische Länge mindestens 0,1 cm kürzer als ein Viertel der Wellenlänge der im Kombinationsgargerät verwendeten Mikrowellenstrahlung ist. Besonders bevorzugt ist die elektrische Länge mindestens 0,5cm kürzer als ein Viertel der Wellenlänge der im Kombinationsgargerät verwendeten Mikrowellenstrahlung. Ganz besonders bevorzugt ist die elektrische Länge mindestens 1,5 cm kürzer als ein Viertel der Wellenlänge der im Kombinationsgargerät verwendeten Mikrowellenstrahlung.

Gemäß einem ersten Aspekt der Erfindung ist es vorgesehen, dass der Kerntemperaturfühler mit einer Mikrowellenfalle versehen ist, die einen topfförmigen Fallenabschnitt aufweist, der eine zum Messabschnitt ausgerichtete Fallenöffnung hat und in Richtung des Griffabschnitts einen mit einem zentralen Durchgang versehenen Boden aufweist. Durch den zentralen Durchgang verläuft das Kontaktierungsrohr.

Mit "topfförmiger Fallenabschnitt" ist der Bereich der Mikrowellenfalle gemeint, der elektromagnetische Wellen im Mikrowellenbereich einfängt. Dazu weist dieser eine geometrische Tiefe auf, gemessen vom Boden bis zur Öffnung, die spezifisch für mindestens eine elektrische Länge der im Garraum verwendeten elektromagnetischen Strahlung ist, um diese im Fallenabschnitt einzufangen.

Mit einer Mikrowellenfalle ist eine Lambda-Viertel-Falle gemeint. Eine Lambda-Viertel-Falle ist eine Baugruppe, die verhindert, dass Mikrowellenstrahlen die Baugruppe passieren. Grundsätzlich kann die Mikrowellenfalle beliebig gestaltet sein, solange diese eine geometrische Tiefe aufweist, die einer elektrischen Länge von in etwa einem Viertel der Wellenlänge der im Garraum verwendeten Mikrowellenstrahlung entspricht. Die Lambda-Viertel-Falle kann ferner ein Dielektrikum aufweisen, wodurch die geometrische Tiefe kürzer als ein Viertel der Wellenlänge ist, wobei die Lambda-Viertel-Falle dennoch eine elektrische Länge aufweist, die einem Viertel der Wellenlänge entspricht.

Ferner wirkt die Mikrowellenfalle auch synergistisch mit der Anordnung von Kontaktstelle und griffseitigem Ende zusammen, da die Mikrowellenfalle die in den Griffabschnitt eintretende Mikrowellenstrahlung insgesamt reduziert, und der Abstand zwischen der Kontaktstelle und dem griffseitigen Ende den Energieeintrag der noch verbleibenden Mikrowellenstrahlung in den Griffabschnitt noch weiter vermindert.

Insbesondere ist das Kontaktierungsrohr an dem zentralen Durchgang mit dem Boden kontaktiert, wobei das Kontaktierungsrohr bevorzugt an dem zentralen Durchgang mit dem Boden laser-verschweißt ist. Dies stellt ein besonders effizientes Herstellungsverfahren für eine Mikrowellenfalle dar.

Gemäß einem weiteren Aspekt kontaktiert an der Kontaktstelle das Kontaktierungsrohr eine Abschirmung des Kabels elektrisch leitend. Folglich ist gemäß diesem Aspekt das Kontaktierungsrohr aus einem elektrisch leitenden Material gefertigt, wobei das Kontaktierungsrohr bevorzugt aus einem metallischen Werkstoff hergestellt ist. Aufgrund der elektrisch leitenden Eigenschaften kann das Kontaktierungsrohr elektrische Ströme aufnehmen und über die Kontaktstelle in den entmantelten Bereich des Kabels weiterleiten.

Bevorzugt ist die Abschirmung eine Geflechtschirmung. Eine Geflechtschirmung stellt eine bewährte Möglichkeit dar, das Innere des Kabels vor elektromagnetischen Störungen zu schützen.

In einer weiteren Ausgestaltung der Erfindung ist das griffseitige Ende des Kontaktierungsrohrs in einem isolierten Bereich des Kabels angeordnet, in dem die Abschirmung von einem äußeren Leitungsmantel umgeben ist.

Insofern bildet das griffseitige Ende den Übergang vom Kontaktierungsrohr auf den äußeren Leitungsmantel des Kabels. Dabei ist insbesondere das griffseitige Ende auf den äußeren Leitungsmantel des Kabels gecrimpt, womit der Kabel und das Ende des Kontaktierungsrohrs fest miteinander verbunden sind. Zum einen ist die Anordnung des griffseitigen Endes auf dem äußeren Leitungsmantel vorteilhaft, um einen entlang des Kontaktierungsrohrs entstehenden Strom nicht über beliebige Stellen in die Abschirmung einzuleiten, sondern lediglich in den entmantelten Bereich, wodurch die in das Kabel eingeleiteten Ströme definiert sind. Zum anderen wird ein Eindringen von Flüssigkeit und Luftfeuchtigkeit verhindert.

Der äußere Leitungsmantel ist bevorzugt aus einem elektrisch nicht-leitenden Material gefertigt, beispielsweise PTFE.

Ein weiterer Aspekt der Erfindung sieht vor, dass im entmantelten Bereich unterhalb der Abschirmung ein Gegendruckelement angeordnet ist, das dazu eingerichtet ist, eine radial nach außen gerichtete Kraft auf die Abschirmung auszuüben, sodass dieses nach außen gegen das Kontaktierungsrohr gepresst ist.

Das Gegendruckelement kann eine Hülse oder ähnliches sein. Voraussetzung ist lediglich, dass das Gegendruckelement die Form eines holzylindrischen Körpers aufweist, sodass dieser das Innere des Kabels aufnehmen kann.

Bevorzugt weist das Gegendruckelement einen Durchmesser auf, der gleich oder größer als der Durchmesser der Abschirmung ist, sodass wenn die Abschirmung über das Gegendruckelement gestülpt ist, dieses durch gleichen oder größeren Durchmesser des Gegendruckelements radial nach außen gedrückt ist.

Alternativ kann im entmantelten Bereich über der Abschirmung ein Presselement angeordnet sein, worüber die Kontaktstelle ausgebildet ist, welche das Kabel, insbesondere dessen Abschirmung, mit dem Kontaktierungsrohr (indirekt) verbindet. Mit anderen Worten bildet das Kontaktierungsrohr mit dem Kabel eine (indirekte) Kontaktierungsstelle aus, nämlich im entmantelten Bereich.

Das Presselement kann mit der Abschirmung vercrimpt und mit dem Kontaktierungsrohr rolliert sein. Um einen Gegendruck zum Rollieren an das Kontaktierungsrohr zu bieten, kann das Presselement einen Abschnitt aufweisen, der einen im Vergleich zum übrigen Teil des Presselements größeren Durchmesser aufweist.

Insofern ist das das Kontaktierungsrohr indirekt mit dem Kabel über das Presselement verbunden.

Grundsätzlich stellt die Kontaktstelle einen elektrischen Kontakt zwischen dem Kabel und dem Kontaktierungsrohr her. Der elektrische Kontakt kann indirekt, nämlich über das Presselement, oder direkt erfolgen, sofern das Kontaktierungsrohr einen Teil des Kabels direkt kontaktiert, bspw. dessen Abschirmung. Dabei kann das Gegendruckelement vorgesehen sein, welches unter der Abschirmung angeordnet ist.

Für das Kontaktierungsrohr kann aber auch das Presselement das Gegendruckelement darstellen. Dies liegt daran, dass das Presselement zwar auf das Kabel, insbesondere dessen Abschirmung, aufgebracht ist, aber für das Kontaktierungsrohr als das Gegendruckelement fungiert, sofern dieses rolliert wird.

Eine andere Ausführungsform der Erfindung beinhaltet, dass das Kontaktierungsrohr die Abschirmung an der Kontaktstelle entlang des Umfangs der Abschirmung im Wesentlichen vollständig berührt, sodass die Kontaktstelle als ein durchgängiger Kontaktring ausgebildet ist. Alternativ kann das Kontaktierungsrohr das Presselement an der Kontaktstelle entlang des Umfangs des Presselements im Wesentlichen vollständig berührt, sodass die Kontaktstelle als ein durchgängiger Kontaktring ausgebildet ist.

Dadurch kann eine besonders gute Kontaktierung gewährleistet werden. Darüber hinaus stellt eine durchgängige Kontaktierung in Form eines Kontaktringes eine besonders stabile Verbindung zwischen dem Kontaktierungsrohr und der Abschirmung bzw. dem Presselement dar.

Gemäß einem weiteren Aspekt der Erfindung ist die Kontaktstelle durch eine radial nach innen gerichtete Wölbung des Kontaktierungsrohrs gebildet, wobei die Wölbung insbesondere durch ein Rollieren des Kontaktierungsrohrs auf das Kabel hergestellt ist.

Mit der nach innen gerichteten Wölbung ist eine radial nach innen zeigende Vertiefung entlang des Umfangs des Kontaktierungsrohrs gemeint, die wenigstens mit ihrem Scheitelpunkt die Abschirmung berührt und damit elektrisch leitend kontaktiert. Eine Wölbung ist einfach herzustellen und stellt somit eine einfache Ausgestaltung dar, dass Kontaktierungsrohr mit der Abschirmung zu kontaktieren. Ferner verringert die Wölbung den Durchmesser des Kontaktierungsrohrs und drückt auf die Abschirmung, sodass die Abschirmung und damit auch das Kabel an der Wölbung verrutschsicher gehalten sind.

Ein anderer Aspekt der Erfindung sieht vor, dass die Kontaktstelle in einem minimalen Abstand vom Boden entfernt angeordnet ist.

Erfindungsgemäß entspricht der Abstand von Kontaktstelle und griffseitigen Ende einem Abstand, der einer elektrischen Länge der Mikrowellenstrahlung im Griffabschnitt entspricht, die gleich oder kleiner als ein Viertel der Wellenlänge der im Kombinationsgargerät verwendeten Mikrowellenstrahlung ist. Diese Bedingung kann besonders einfach realisiert werden, indem die Kontaktstelle so nah wie möglich an Boden der Mikrowellenfalle platziert wird. Mit einem minimalen Abstand ist also der technisch minimalst mögliche Abstand gemeint, in dem der Boden vom der Kontaktstelle entfernt sein darf, ohne dass der Boden durch das Einbringen der Kontaktstelle zwischen Kontaktierungsrohr und Abschirmung verformt wird, wodurch die Funktion der Mikrowellenfalle negativ beeinträchtigt werden würde.

Beispielsweise beträgt der Abstand 0,1 - 4 mm, bevorzugt 0,1 - 2 mm, ganz besonders bevorzugt 0,1 - 1 mm.

Gemäß einem weiteren Aspekt der Erfindung weist die Fallenöffnung einen Abstand zum griffseitigen Ende auf, der einer elektrischen Länge der Mikrowellenstrahlung im Griffabschnitt entspricht, die kürzer als oder gleich ein Viertel der Wellenlänge der im Kombinationsgargerät verwendeten Mikrowellenstrahlung ist.

Der Abstand zwischen der Fallenöffnung und dem griffseitigen Ende wird gemessen vom Mittelpunkt der Fallenöffnung bis zum Mittelpunkt des griffseitigen Endes des Kontaktierungsrohrs, wobei beide Mittelpunkte eine gemeinsame Rotationsachse aufweisen, die sich vom Griffabschnitt bis in den Messabschnitt erstreckt.

Durch den gewählten Abstand zwischen der Fallenöffnung und dem griffseitigen Ende liegt der Übergang vom Kontaktierung auf dem äußeren Leitungsmantel des Kabels ebenfalls in einem lokalen bzw. globalen Minimum im elektrischen Feld bei Mikrowellenbetrieb des Gargeräts. Somit wird eine geringere Feldstärke auf den Übergangspunkt gekoppelt und damit der Mantelstromfluss reduziert. Dies ergibt den Vorteil, dass am griffseitigen Ende weniger Wärme entsteht, wodurch die Haltbarkeit des Kerntemperaturfühlers verlängert wird.

Ferner betrifft die Erfindung ein Kombinationsgargerät zum Garen von Gargut, mit einem Garraum, einem Mikrowellengenerator und einer Steuereinheit, die mit einem im Garraum vorgesehenen Kerntemperaturfühler nach einem der vorhergehenden Aspekte in Verbindung steht. Unter einem Kombinationsgargerät ist ein Gargerät zum Garen von Gargut gemeint, das neben dem Einsatz von Mikrowellenstrahlen, das Gargut zudem mittels Dampf und/oder Heißluft garen kann. Ein solches Gargerät erlaubt eine Kombination von verschiedenen Garmethoden, die entweder einzeln oder gemeinsam verwendet werden können.

Aufgrund der Verwendung eines Kerntemperaturfühlers nach den oben genannten Aspekten kann das erfindungsgemäße Kombinationsgargerät im Mikrowellenbetrieb den Kerntemperaturfühler verwenden, ohne dass es zu einer übermäßig starken Erhitzung des Griffabschnitts und/oder des Messabschnitts kommt. Da sich der Messabschnitt nicht lokal stark erwärmt, ist auch eine genauere Temperaturabfrage möglich, wodurch das Gargerät den Garvorgang präziser überwachen kann. Dies ermöglicht auch den Garvorgang genauer zu steuern und bessere Garergebnisse zu erzielen. Hingegen ermöglicht eine geringere Erwärmung des Griffabschnitts eine längere Haltbarkeit des Kerntemperaturfühlers.

Weitere Merkmale und Vorteile der Erfindung ergeben sich aus der nachfolgenden Beschreibung und den beigefügten Zeichnungen, auf die Bezug genommen wird. In den Zeichnungen zeigen:

- Figur 1 in einer schematischen Darstellung ein erfindungsgemäßes Kombinationsgargerät mit einem erfindungsgemäßen Kerntemperaturfühler;

- Figur 2 in einer schematischen Schnittansicht den erfindungsgemäßen Kerntemperaturfühler aus Figur 1;

- Figur 3 in einer schematischen Schnittansicht den Griffabschnitt des erfindungsgemäßen Kerntemperaturfühlers aus Figur 1;

- Figur 4 in einer schematischen Darstellung das messseitige Ende eines Kabels für den erfindungsgemäßen Kerntemperaturfühler aus Figur 1;

- Figur 5 in einer schematischen Schnittansicht die Führung des Kabels im Griff des erfindungsgemäßen Kerntemperaturfühlers aus Figur 1;

- Figur 6A in einer schematischen Schnittansicht die Führung des Kabels im Griff des erfindungsgemäßen Kerntemperaturfühlers aus Figur 1, mit einem Gegendruckelement;

- Figur 6B in einer schematischen Schnittansicht die Führung des Kabels im Griff des erfindungsgemäßen Kerntemperaturfühlers aus Figur 1, mit einem Presselement, das als eine Überwurfhülse ausgeführt ist;

- Figur 7 ein Simulationsmodell zum Simulieren der elektromagnetischen Belastung entlang des erfindungsgemäßen Kerntemperaturfühlers aus Figur 1;

- Figur 8 eine Simulationsgraphik gemäß dem Simulationsmodell aus Figur 7 von einem E-Feld entlang eines nicht-erfindungsgemäßen Kerntemperaturfühlers;

- Figur 9 ein Diagramm der Simulationsgraphik aus Figur 8;

- Figur 10 eine Simulationsgraphik gemäß dem Simulationsmodell aus Figur 7 von einem E-Feld entlang eines erfindungsgemäßen Kerntemperaturfühlers; und

- Figur 11 ein Diagramm der Simulationsgraphik aus Figur 10.

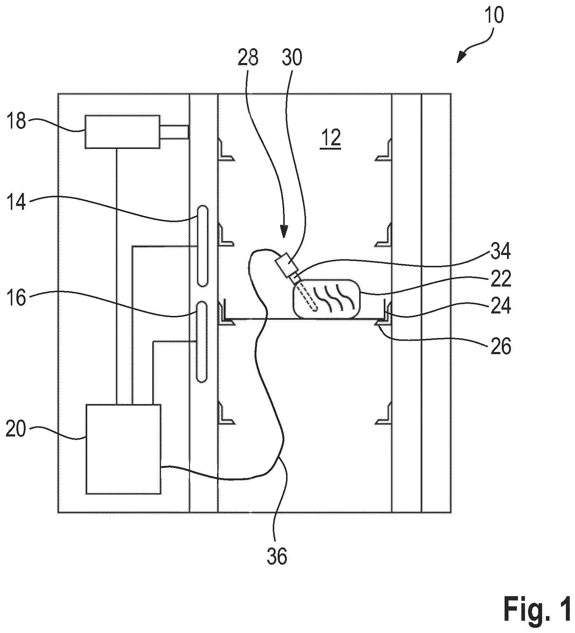

Figur 1 zeigt schematisch ein erfindungsgemäßes Kombinationsgargerät 10, das einen Garraum 12 aufweist.

Zudem sind im Kombinationsgargerät 10 eine Heizvorrichtung 14, ein Dampfgenerator 16 und ein Mikrowellengenerator 18 angeordnet, die jeweils mit einer Steuereinheit 20 verbunden sind und von dieser angesteuert werden.

Im Garraum 12 ist ein Gargut 22 eingebracht, das auf einem Gargutträger 24 platziert ist. Der Gargutträger 24 kann ein Blech, eine Schale oder ein Rost sein, das innerhalb des Garraums 12 in einem Einschub 26 eingeschoben ist.

Die Heizvorrichtung 14 und der Dampfgenerator 16 sind dazu eingerichtet, im Garraum 12 ein bestimmtes Garraumklima bereitzustellen. Das Garraumklima wird dabei von der Steuereinheit 20 vorgegeben, insbesondere in Abhängigkeit eines ablaufenden Garprogramms. Der Mikrowellengenerator 18 ist dazu ausgebildet, elektromagnetische Strahlung in Form von Mikrowellen mit einer Wellenlänge $\lambda$ zu erzeugen und in den Garraum 12 einzuspeisen. Bevorzugt werden Mikrowellen mit einer Frequenz von 2,45 Gigahertz (entspricht einer Wellenlänge $\lambda$ von 12,45 cm im Vakuum) in den Garraum 12 eingespeist. Die in den Garraum 12 eingebrachte Mikrowellenstrahlung kann das Gargut 22 mit (zusätzlicher) Energie beaufschlagen, wodurch das Gargut 22 gegart wird.

Außerdem ist im Garraum 12 ein Kerntemperaturfühler 28 vorgesehen, der dazu eingerichtet ist, die Kerntemperatur des Garguts 22 während eines Garvorgangs zu überwachen, sofern der Kerntemperaturfühler 28 in das Gargut 22 eingesteckt ist. Mittels des Kerntemperaturfühlers 28 kann bei einem Fleischstück wie einem Braten durch Messung der Kerntemperatur kontrolliert werden, wann der Braten den gewünschten Gargrad erreicht hat.

Der Kerntemperaturfühler 28 weist einen Griffabschnitt 30 und einen an den Griffabschnitt 30 angrenzenden Messabschnitt 32 auf. Der Griffabschnitt 30 ist dazu eingerichtet, dass ein Benutzer den Kerntemperaturfühler 28 dort anfassen kann.

Der Messabschnitt 32 erfüllt dagegen die eigentliche Funktion des Kerntemperaturfühlers 28, nämlich die Kerntemperatur im Inneren des Garguts 22 zu ermitteln. Um eine Kerntemperaturabfrage zu ermöglichen, ist der Kerntemperaturfühler 28 zumindest teilweise in das Gargut 22 eingesteckt. Dabei kann der Kerntemperaturfühler 28 über die komplette Länge des Messabschnitts 32, so wie in Figur 1 gezeigt, in das Gargut 22 eingesteckt sein oder auch nur teilweise, insbesondere bei kleinem oder weniger voluminösen Gargut 22.

Ferner weist der Kerntemperaturfühler 28 eine Mikrowellenfalle 34 auf, die am Übergang zwischen dem Messabschnitt 32 und dem Griffabschnitt 30 angeordnet ist. Im eingesteckten Zustand befindet sich die Mikrowellenfalle 34 also außerhalb des Garguts 22 oder liegt höchstens mit seiner Stirnseite an diesem an.

Die Mikrowellenfalle 34 ist dazu ausgebildet, bei eingeschaltetem Mikrowellenbetrieb des Kombinationsgargeräts 10, also wenn Mikrowellen in den Garraum 12 eingespeist werden, den Kerntemperaturfühler 28 vor der Energie der Mikrowellen zu schützen.

Um eine Fallenwirkung zu erreichen, ist die Mikrowellenfalle 34 als eine Lambda-Viertel-Falle ausgebildet, die auf die im Garraum 12 verwendete Wellenlänge der elektromagnetischen Strahlung abgestimmt ist. Dazu weist die Mikrowellenfalle 34 eine geometrische Länge (Fallentiefe) auf, die der elektrischen Länge von in etwa einem Viertel der Wellenlänge der im Gargerät 10 verwendeten elektromagnetischen Strahlung entspricht.

Der Kerntemperaturfühler 28 ist mit der Steuereinheit 20 über ein Kabel 36 signalübertragend verbunden. Auf diese Weise kann der Kerntemperaturfühler 28 die gemessene Kerntemperatur an die Steuereinheit 20 weiterleiten, damit diese den Garvorgang überwachen und gegebenenfalls unter Berücksichtigung der gemessenen Kerntemperatur den Garvorgang regeln kann.

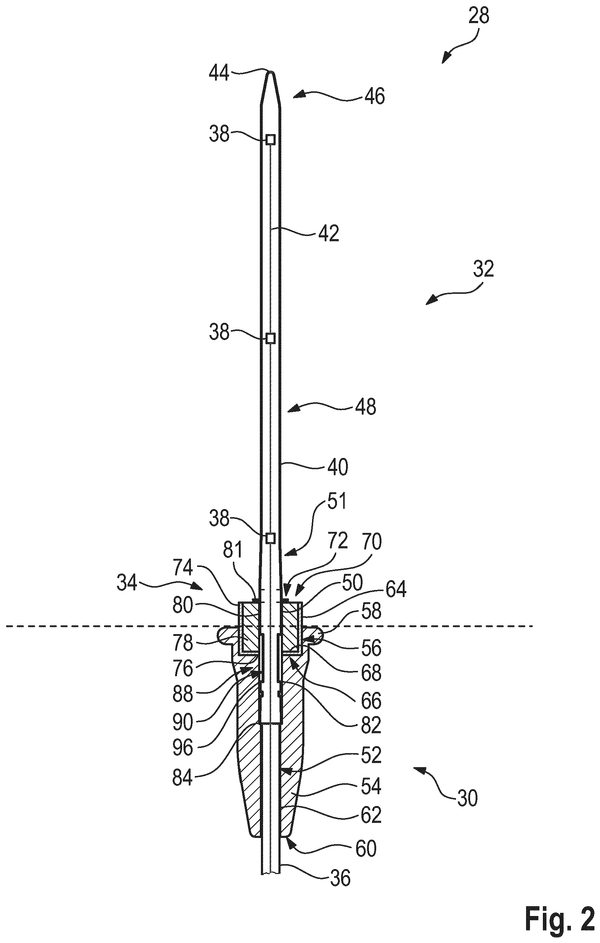

Weitere Details des Kerntemperaturfühlers 28 sind in Figur 2 näher erläutert, worauf nachfolgend Bezug genommen wird.

In Figur 2 ist der Kerntemperaturfühler 28 in zwei Abschnitte unterteilt, die in der Zeichnung durch eine gestrichelte Linie voneinander getrennt sind. Der Bereich oberhalb der gestrichelten Linie in Figur 2 ist der Messabschnitt 32, der in das Gargut 22 zumindest teilweise eingesteckt wird, um die Temperatur im Inneren des Garguts 22 zu messen. Unterhalb der gestrichelten Linie befindet sich der Griffabschnitt 30, der zur Handhabung des Kerntemperaturfühlers 28 dient. Auf Höhe der gestrichelten Linie und damit zwischen dem Messabschnitt 32 und dem Griffabschnitt 30 ist die Mikrowellenfalle 34 vorgesehen, also im Übergang.

Für die Temperaturerfassung sind entlang des Messabschnitts 32 mehrere Temperatursensoren 38 vorgesehen, vorliegend drei Temperatursensoren 38. Denkbar ist selbstverständlich jede andere Anzahl an Temperatursensoren. Bevorzugt sind die Temperatursensoren 38 gleichmäßig entlang des Messabschnitts 32 vorgesehen. Es kann auch wenigstens ein weiterer Temperatursensor 38 im Griffabschnitt 30 vorgesehen sein, der als Referenzmessung für die Garraumtemperatur oder als Teil eines Mikrowellenlastsensors fungieren kann.

Die Temperatursensoren 38 sind von einer Messlanze 40 umgeben, die in der gezeigten Ausführungsform als ein Hohlzylinder ausgebildet ist. Außerdem ist in der Messlanze 40 eine Leitung 42 vorgesehen, die sich entlang des Messabschnitts 32 erstreckt und die Temperatursensoren 38 untereinander verbindet. Ausgehend von den Temperatursensoren 38 erstreckt sich die Leitung 42 in den Griffabschnitt 30 hinein und bildet den signalübertragenden Bestandteil des Kabels 36. Die von den Temperatursensoren 38 erfasste Kerntemperaturwerte können somit an die Steuereinheit 20 weitergegeben werden.

Damit die metallische Messlanze 40 in das Gargut 22 eingesteckt werden kann, ist die Messlanze 40 an seinem freien, von dem Griffabschnitt 30 abgewandten, Ende mit einer Spitze 44 versehen, woran ein Endabschnitt 46 angrenzt, der sich in Richtung Griffabschnitt 30 konisch aufweitet und in einen gerade verlaufenden Schaftabschnitt 48 mündet.

Genauer betrachtet beherbergt der Schaftabschnitt 48 die Leitung 42 und die Temperatursensoren 38.

Zudem ist ein Kontaktierungsrohr 50 vorgesehen, das mit der Messlanze 40 gemeinsam einstückig ausgebildet sein oder separat von dieser getrennt vorliegen und an der Messlanze 40 befestigt sein kann. Beispielsweise kann die Messlanze 40 mit dem Kontaktierungsrohr 50 verschweißt sein, insbesondere laserverschweißt sein.

Wie in Figur 2 zu erkennen ist, weist das Kontaktierungsrohr 50 einen größeren Durchmesser auf als die Messlanze 40, sodass ein Übergangsabschnitt 51 vorgesehen ist, in dem sich die Messlanze 40 konisch in Richtung Griffabschnitt 30 aufweitet bis der Durchmesser dem des Kontaktierungsrohrs 50 entspricht. Der Übergangsabschnitt 51 kann mit der Messlanze 40 und/oder dem Kontaktierungsrohr 50 gemeinsam einstückig ausgeführt sein oder separat von diesen getrennt vorliegen und mit beiden verschweißt sein, insbesondere laser-verschweißt.

Das Kontaktierungsrohr 50 erstreckt sich zumindest teilweise in den Griffabschnitt 30 hinein und weist ein griffseitiges Ende 52 auf, das dem Griffabschnitt 30 zugewandt ist.

Wie in Figur 2 gezeigt ist, endet das griffseitige Ende 52 etwa auf halber Höhe des Griffabschnitts 30.

Zudem ist in dem Kontaktierungsrohr 50 das Kabel 36 geführt, das sich in das griffseitige Ende 52 hineinerstreckt und in Richtung Messabschnitt 32 verläuft.

Nachfolgend wird der Griffabschnitt 30 näher erläutert.

Im Griffabschnitt 30 des Kerntemperaturfühlers 28 ist ein Griff 54 vorgesehen, der beispielswiese aus einem Kunststoff gefertigt ist, bevorzugt aus einem hitzebeständigen Kunststoff, insbesondere PEEK. Der Griff 54 weist eine in Richtung Messabschnitt 32 langgestreckte zylindrische Form auf, wobei der Griff 54 ein dem Messabschnitt 32 zugewandtes Ende und ein davon abgewandtes zweites Ende aufweist.

An seinem dem Messabschnitt 32 zugewandten Ende ist der Griff 54 mit einer fallenseitigen Öffnung 56 versehen, welche die Mikrowellenfalle 34 zumindest teilweise umgibt. Bevorzugt ist der Griff 54 um die Mikrowellenfalle 34 spritzgegossen, sodass die Mikrowellenfalle 34 fest im Bereich der fallenseitigen Öffnung 56 mit dem Griff 54 verbunden ist.

Außerdem weist der Griff 54 im Bereich um die fallenseitige Öffnung 56 einen Knauf 58 auf, der als ein durchgehender radialer Vorsprung ausgebildet ist, der die Mikrowellenfalle 34 vollständig umgibt. Der Knauf 58 dient dazu, den Kerntemperaturfühler 28 sicher zu handhaben, ohne dass ein Benutzer vom Griff 54 abrutscht.

An dem vom Messabschnitt 32 abgewandten Ende, das zur fallenseitigen Öffnung 52 entgegengesetzt liegt, weist der Griff 54 eine kabelseitige Öffnung 60 auf. Von der kabelseitigen Öffnung 60 bis zur fallenseitigen Öffnung 56 erstreckt sich ein Kabelkanal 62, der das Kabel 36 aufnimmt. Folglich kann der Griff 54 als ein Hohlzylinder ausgebildet sein. Auf halber Höhe des Kabelkanals 62, der in etwa der halben Höhe des Griffs 54 entspricht, befindet sich das griffseitige Ende 52 des Kontaktierungsrohrs 50.

Wie bereits in Figur 1 gezeigt, ist am Übergang zwischen dem Griffabschnitt 30 und den daran angrenzenden Messabschnitt 32 die Mikrowellenfalle 34 vorgesehen, worauf nachfolgend eingegangen wird.

Figur 2 zeigt, dass die Mikrowellenfalle 34 einen zylindrischen Fallenabschnitt 64 umfasst, der topfförmig ausgebildet ist, sodass der Fallenabschnitt 64 an einem ersten Ende 66 einen Boden 68, der dem Griffabschnitt 30, und an einem zweiten Ende 70 eine Fallenöffnung 72 aufweist, die dem Messabschnitt 32 zugewandt ist. Die beiden Enden 66, 70 sind entgegengesetzt zueinander. Demzufolge ist der Boden 68 dem Griffabschnitt 30 und die Fallenöffnung 72 dem Messabschnitt 32 zugeordnet. Die Fallenöffnung 72 ist von einem Randbereich 74 umgeben.

Zudem umgibt der Fallenabschnitt 64 das Kontaktierungsrohr 40, das sich vom Messabschnitt 32 zum Griffabschnitt 30 durch einen Durchgang 76 im Boden 68 des Fallenabschnitts 64 hindurch erstreckt. Hierbei ist der Fallenabschnitt 64 am Durchgang 76 mit dem Kontaktierungsrohr 40 kontaktiert. Insbesondere ist der Fallenabschnitt 64 mit dem Kontaktierungsrohr 40 am Durchgang 76 laser-verschweißt. Mit anderen Worten ist der Boden 68 bis zum Kontaktierungsrohr 40 geschlossen ausgebildet.

Ferner weist die Mikrowellenfalle 34 ein dielektrisches Füllelement 78 auf, das im Fallenabschnitt 64 angeordnet ist. Genauer gesagt ist das dielektrische Füllelement 78 zwischen dem Kontaktierungsrohr 40 und dem Fallenabschnitt 64 angeordnet.

Das Füllelement 78 kontaktiert beispielsweise über eine Stirnseite den Boden 68 des Fallenabschnitts 64 sowie entlang seines Außenumfangs eine Innenseite des Fallenabschnitts 64.

Beispielsweise kann das dielektrische Füllelement 78 eine Keramik mit einer Dielektrizitätskonstante von 9 bis 10 (bei 20°C und 1 GHz) sein, insbesondere eine Keramik aus Aluminiumoxid mit einer Reinheit von mindestens 95 %.

Um den Verlauf des Kontaktierungsrohrs 40 vom Messabschnitt 32 hin in den Griffabschnitt 30 zu ermöglichen, ist das dielektrische Füllelement 78 als ein Hohlzylinder geformt, der eine Durchgangsöffnung 80 aufweist, die mit dem Durchgang 76 im Boden 68 fluchtet, sodass sich das Kontaktierungsrohr 40 durch den Durchgang 76 und die Durchgangsöffnung 80 zumindest teilweise erstreckt.

Wie in Figur 2 gut zu erkennen ist, erstreckt sich das Kontaktierungsrohr 40 in der gezeigten Ausführungsform vollständig durch die Durchgangsöffnung 80 durch das Füllelement 78 hindurch. Insofern erstreckt sich das Kontaktierungsrohr 40 auch vollständig durch den Fallenabschnitt 64 hindurch. Dies führt dazu, dass das Füllelement 78, das Kontaktierungsrohr 40 und der Fallenabschnitt 64 koaxial zueinander angeordnet sind.

Außerdem ist im Bereich um die Fallenöffnung 72 des Fallenabschnitts 64 ein ringförmiges Abschlusselement 81 vorgesehen, das auf der Stirnseite 83 des Füllelements 78 aufliegt und den Umfang des Kontaktierungsrohrs 40 vollständig umschließt, wobei das ringförmige Abschlusselement 81 am Kontaktierungsrohr 40 befestigt ist, insbesondere laser-verschweißt. Das ringförmige Abschlusselement 81 dient dazu, das dielektrische Füllelement 78 verliersicher in der Mikrowellenfalle 34 zu halten.

Bevorzugt ist das ringförmige Abschlusselement 81 aus einem elektrisch leitenden Material gefertigt. Besonders bevorzugt ist das ringförmige Abschlusselement 81 aus einem Metall oder einer Legierung hergestellt.

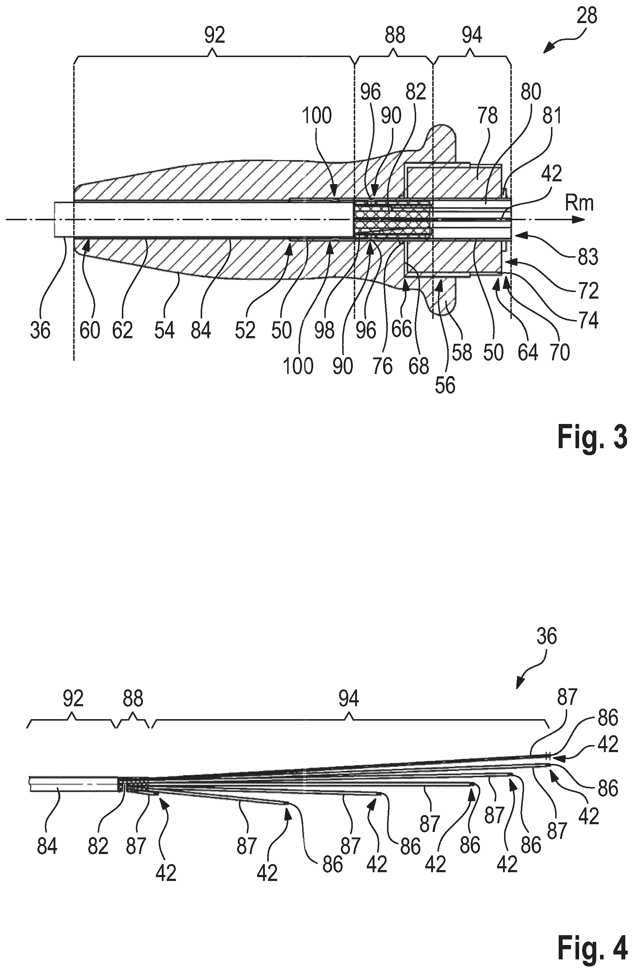

Die Mikrowellenfalle 34 ist ausgelegt, ein übermäßiges Erhitzen des Griffs 54 und damit des gesamten Kerntemperaturfühlers 28 zu verhindern. Um dies zu erreichen, ist das Kontaktierungsrohr 50 mit dem Kabel 36 auf eine bestimmte Weise kontaktiert, die nachfolgend anhand der Figuren 3 - 6 erläutert wird.

Zunächst wird näher auf den Aufbau des Kabels anhand von Figur 4 eingegangen.

Das Kabel 36 umfasst wenigstens die Leitung 42, die von einer Abschirmung 82 umhüllt ist. Diese ist wiederum von einem Leitungsmantel 84 umgeben.

Die Abschirmung 82 dient dazu, das Innere des Kabels 36, also die mindestens eine Leitung 42 vor elektromagnetischen Störungen zu schützen.

Bei der Abschirmung 82 kann es sich um eine Geflechtschirmung handeln, wie in Fig. 3 gezeigt ist. Beispielsweise ist die Geflechtschirmung als Kupferdrähte ausgeführt, die um die wenigstens eine Leitung 42 herum geflochten sind. Die Drähte sind entweder blank oder verzinnt. In jedem Fall ist die Abschirmung 82 aus einem elektrisch leitenden Material gefertigt.

Die wenigstens eine Leitung 42 ist bevorzugt aus einem Kupferdraht 86 gefertigt und mit einer weiteren Hülle 87 isoliert. Auf diese Weise kann die Leitung 42 gegen die Abschirmung 82 sowie gegen wahlweise weitere Leitungen 42 isoliert werden. Wie in Figur 4 gezeigt, umfasst das Kabel 36 bevorzugt sechs Leitungen 42.

Alternativ kann die Abschirmung 82 auch eine Folie sein. Der äußere Leitungsmantel 84 dient dazu, das Kabelinnere vor Feuchtigkeit und sonstigen Flüssigkeiten aus dem Garraum 12 zu schützen. Dieser kann aus PTFE gefertigt sein.

Der äußere Leitungsmantel 84 kann aus Polytetrafluorethylen (PTFE) gefertigt sein und eine Wanddicke größer als 0,3 mm aufweisen, beispielsweise im Bereich von 0,35 mm bis 1 mm, bevorzugt von 0,45 mm bis 0,7 mm. Dies stellt eine deutliche Verstärkung des äußeren PTFE-Leitungsmantels 84 im Vergleich zu herkömmlichen Ummantelungen dar, deren Wanddicke üblicherweise kleiner als 0,1 mm ist, insbesondere in einem Bereich von 0,01 mm bis 0,05 mm liegt. Dadurch kann die Temperatur im Inneren des Kabels 36 während des Mikrowellenbetriebs des Kombinationsgargeräts 10 niedrig gehalten werden, sodass es nicht zu einer Überhitzung der einzelnen Leitungen 42 kommt. Die Leitungen 42 sind aufgrund des äußeren Leitungsmantels 84 mit der entsprechenden Wanddicke besser abgeschirmt.

Letztendlich stellt der äußere Leitungsmantel 84 mit seiner Wanddicke sicher, dass der Abstand zwischen der Abschirmung 82, welche (direkt) vom äußeren Leitungsmantel 84 umgeben ist, und einem Metall des Garraums 12, bspw. einer Garraumwand, ausreichend groß ist. Der äußere Leitungsmantel 84 stellt also aufgrund seiner Wanddicke ebenfalls eine (elektromagnetische) Abschirmung für die Leitungen 42 dar, insbesondere zusätzlich zur Abschirmung 82. Aufgrund der Wanddicke des äußeren Leitungsmantels 84 ist insbesondere sichergestellt, dass die Leitungen 42 in dem im Garraum 12 vorliegenden elektrischen Feld optimaler positioniert sind.

Das Kabel 36 ist im Griffabschnitt 30 verliersicher fixiert, indem das Kabel 36 an dem Kontaktierungsrohr 50 befestigt ist. Dazu weist das Kabel 36 im Griffabschnitt 30 einen entmantelten Bereich 88 auf. In diesem entmantelten Bereich 88 bildet das Kontaktierungsrohr 50 mit dem Kabel 36 eine Kontaktstelle 90 aus.

Der entmantelte Bereich 88 zeichnet sich dadurch aus, dass dieser Abschnitt des Kabels 36 abisoliert ist, also von dem äußeren Leitungsmantel 84 befreit ist, sodass der darunterliegende Teil des Kabels 36, also die Abschirmung 82 nach außen hin freigelegt ist. Dadurch kann das Kontaktierungsrohr 50 die Abschirmung 82 über die Kontaktstelle 90 kontaktieren. Der entmantelte Bereich 88 ist im Griffabschnitt 30 vorgesehen und erstreckt sich in Richtung Messabschnitt 32 bis in die Mikrowellenfalle 34 hinein.

Im Grunde definiert der Abschnitt der Abschirmung 82, der nicht vom äußeren Leitungsmantel 84 umgeben ist, die räumliche Ausdehnung des entmantelten Bereichs 88. Dieser erstreckt sich in die Mikrowellenfalle 34 hinein.

Angrenzend an den entmantelten Bereich 88 ist in Richtung Griffabschnitt 30 ein isolierter Bereich 92 des Kabels 36 vorgesehen, wobei im isolierten Bereich 92 die Abschirmung 82 nicht von dem Leitungsmantel 84 befreit ist, und in dem das griffseitige Ende 52 des Kontaktierungsrohrs 50 angeordnet ist. Folglich liegt das griffseitige Ende 52 auf dem äußeren Leitungsmantel 84 auf. Das griffseitige Ende 52 des Kontaktierungsrohrs 50 ist insbesondere auf den äußeren Leitungsmantel 84 gecrimpt, wodurch eine feste Verbindung zwischen Kabel 36 und Kontaktierungsrohr 50 erreicht ist. Der isolierte Bereich 92 erstreckt sich aus dem Griff 54 hinaus bis in die Steuereinheit 20 hinein.

Angrenzend an den entmantelten Bereich 88 in Richtung Messabschnitt 32 ist ein abschirmfreier Abschnitt 94 vorgesehen, in dem das Kabel 36 von der Abschirmung 82 befreit ist, sodass sich lediglich die Leitungen 42 in die Messlanze 40 hineinerstrecken. Insofern ist der entmantelte Bereich 88 zwischen dem isolierten Bereich 92 und dem abschirmfreien Abschnitt 94 angeordnet. Bevorzugt endet die Abschirmung 82 vor der Messlanze 40. Besonders bevorzugt endet die Abschirmung 82 innerhalb der Mikrowellenfalle 34.

Im Folgenden wird die Kontaktstelle 90 näher erläutert.

Genauer betrachtet kontaktiert das Kontaktierungsrohr 50 an der Kontaktstelle 90 die Abschirmung 82 des Kabels 36 elektrisch leitend, sodass zwischen der Abschirmung 82 und dem Kontaktierungsrohr 50 Ströme fließen können, bspw. Ströme, die durch den Einfluss von Mikrowellenstrahlung auf die Messlanze 40, den Fallenabschnitt 64 und das Kontaktierungsrohr 50 entstehen.

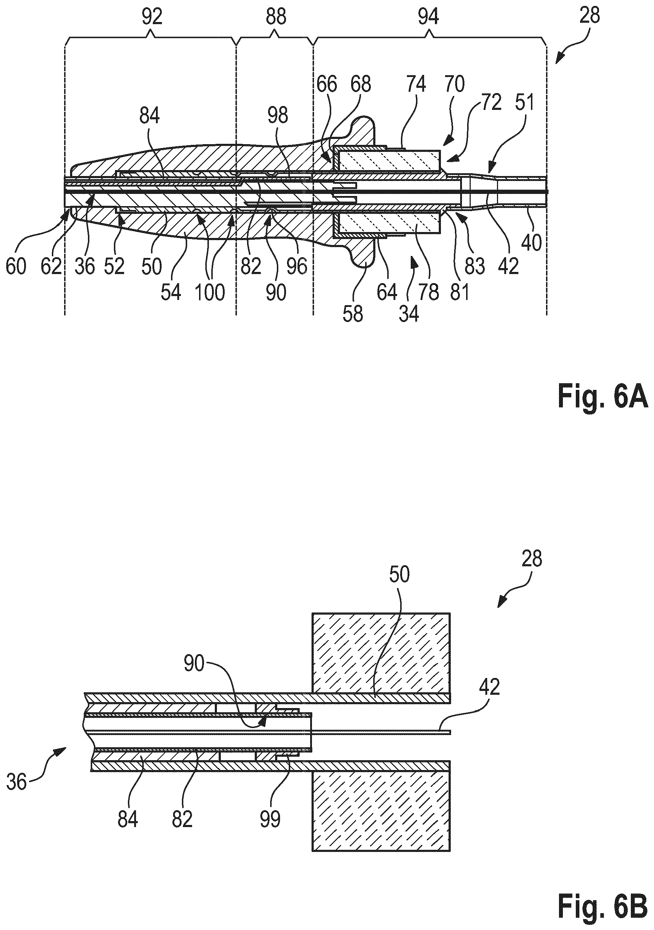

Die Kontaktstelle 90 kann durch eine radial nach innen gerichtete Wölbung 96 des Kontaktierungsrohrs 50 gebildet sein, wobei die Wölbung 96 insbesondere durch ein Rollieren des Kontaktierungsrohrs 50 auf das Kabel 36 hergestellt ist. Dies ist besonders gut in Fig. 6 zu erkennen.

Rollieren stellt ein Verfahren dar, bei dem das Kontaktierungsrohr 50 zunächst auf die Abschirmung 82 aufgeschoben wird und anschließend mindestens teilweise durch ein radial nach innen gerichtete Kraft verformt wird, sodass die Wölbung 96 am Umfang des Kontaktierungsrohrs 50 gebildet wird, welche die Abschirmung 82 berührt. Insofern ist das Kontaktierungsrohr 50 mittels der Kontaktstelle 90 auf die Abschirmung 82 gequetscht, sodass diese verliersicher miteinander verbunden sind.

Zudem kann das Kontaktierungsrohr 50 die Abschirmung 82 an der Kontaktstelle 90 entlang des Umfangs der Abschirmung 82 im Wesentlichen vollständig berühren, sodass die Kontaktstelle 90 als ein durchgängiger Kontaktring ausgebildet ist.

Der Kontaktring kann durch eine durchgängig ausgebildete Wölbung 96 zustande kommen, die den Umfang der Abschirmung 82 geschlossen umgibt.

Wie in den Figuren 3 und 6A gezeigt, kann ferner ein Gegendruckelement 98 vorgesehen sein, das dazu eingerichtet ist, eine radial nach außen gerichtete Kraft auf die Abschirmung 82 auszuüben, sodass dieses nach außen gegen das Kontaktierungsrohr 50 gepresst ist. Auf diese Weise kann die Abschirmung 82, die ohnehin mechanisch flexibel ausgeführt ist, nach außen gespannt werden, um eine bessere elektrische Kontaktierung zwischen Abschirmung 82 und Kontaktierungsrohr 50 zu erreichen.

Das Gegendruckelement 98 kann eine metallische Hülse sein, die im entmantelten Bereich 88 auf die Leitungen 42 aufgeschoben ist, sodass die über den Leitungen 42 liegende Abschirmung 82 radial nach außen verschoben ist. In Figur 6A ist gezeigt, dass die Leitungen 42 durch das Gegendruckelement 98 einen Knick nach außen in Richtung Abschirmung 82 machen.

Alternativ ist, wie in Figur 6B gezeigt, ein Presselement 99 vorgesehen, das als eine metallische Hülse ausgebildet ist. Diese ist im entmantelten Bereich 88 auf die Leitung 42 aufgeschoben, sodass die Abschirmung 82 innerhalb des als Hülse ausgebildeten Presselements 99 liegt, insbesondere hiervon umfangsmäßig komplett umschlossen ist. Die Hülse ist mit der Abschirmung 82 elektrisch leitend verbunden, insbesondere vercrimpt.

Zudem weist die Hülse ein Teilstück auf, über welches die Hülse mit dem Kontaktierungsrohr 50 (mechanisch und/oder elektrisch) verbunden ist, insbesondere rolliert ist. Dabei bietet das Teilstück einen Gegendruck nach außen für das Rollieren an das Kontaktierungsrohr 50, weswegen das Presselement 99 als Gegendruckelement für das Kontaktierungsrohr 50 fungiert. Das Teilstück kann hierzu einen größeren Durchmesser aufweisen als der übrige Teil der Hülse.

Insofern ist über die Hülse die (indirekte) Kontaktstelle 90 ausgebildet, welche die Abschirmung 82 und das Kontaktierungsrohr 50 miteinander verbindet, insbesondere elektrisch leitend verbindet.

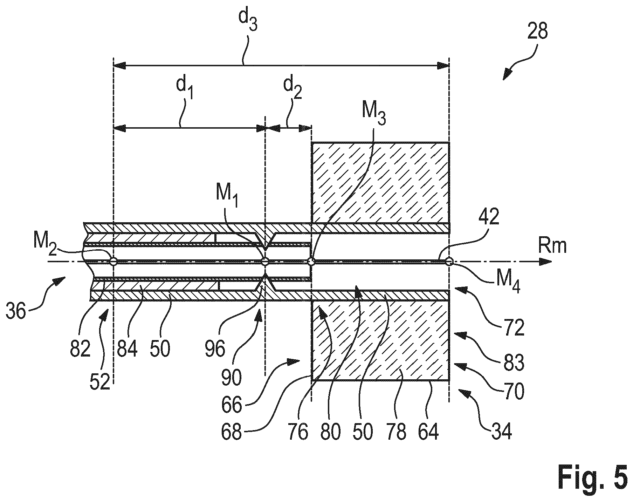

Das Gegendruckelement 98 bzw. das Presselement 99 kann aber auch weggelassen werden. Eine Ausführungsform ohne Gegendruckelement 98 bzw. Presselement 99 ist beispielsweise in Fig. 5 gezeigt.

In jedem Fall ist im entmantelten Bereich 88 die direkte oder indirekte Kontaktstelle 90 ausgebildet, worüber das Kontaktierungsrohr 50 mit dem Kabel 36 direkt oder indirekt (zumindest) elektrisch verbunden ist.

Wie in den Figuren 3 und 6A, 6B gezeigt, kann nicht nur das Kontaktierungsrohr 50 mit der Abschirmung 82 über eine Kontaktstelle 90 kontaktiert sein, sondern das Kontaktierungsrohr 50 kann im isolierten Abschnitt 92 durch mindestens eine Vertiefung 100 auf dem Leitungsmantel 84 gecrimpt sein. Dadurch ist das Kontaktierungsrohr 50 besonders fest mit dem Kabel 36 verbunden und es wird ferner ein Eindringen von Feuchtigkeit über die kabelseitige Öffnung 60 des Griffs 54 verhindert.

Auch die Vertiefung 100 kann als eine nach innen gerichtete Wölbung 96 ausgeführt sein, die wenigstens mit ihrem Scheitelpunkt gegen den Leitungsmantel 84 gepresst ist. Auch eine durchgehende Vertiefung, die den Umfang des Kabels 36 umgibt ist denkbar und bevorzugt.

Um den Wärmeeintrag in den Griff 54 möglichst gering zu halten, ist ein bestimmter Abstand $d_1$ zwischen dem griffseitigen Ende 52 des Kontaktierungsrohrs 50 und der Kontaktstelle 90 zu wählen.

Der Abstand $d_1$ von der Kontaktstelle 90 zum griffseitigen Ende 52 entspricht einer elektrischen Länge der Mikrowellenstrahlung im Griffabschnitt 30, die kürzer als oder gleich ein Viertel der Wellenlänge der im Kombinationsgargerät 10 verwendeten Mikrowellenstrahlung ist. Der Abstand $d_1$ wird gemessen ausgehend von den Mittelpunkten $M_1$ der Kontaktstelle 90 bis zum Mittelpunkt $M_2$ des griffseitigen Endes 52, wobei beide Mittelpunkte auf derselben Rotationsmottelachse $R_m$ liegen.

Besonders bevorzugt ist die Kontaktstelle 90 in einem minimalen Abstand $d_2$ vom Boden 68 entfernt angeordnet. Der Abstand $d_2$ kann in einem Bereich von 0,1 bis 4 mm liegen. Der Abstand $d_2$ wird gemessen ausgehend von den Mittelpunkten $M_1$ der Kontaktstelle 90 bis zum Mittelpunkt $M_3$ des Bodens 68, wobei beide Mittelpunkte auf derselben Rotationsmittelachse $R_m$ liegen.

Darüber hinaus kann die Fallenöffnung 72 einen Abstand $d_3$ zum griffseitigen Ende 52 aufweisen, der einer elektrischen Länge der Mikrowellenstrahlung im Griffabschnitt 30 entspricht, die kürzer als oder gleich ein Viertel der Wellenlänge der im Kombinationsgargerät 10 verwendeten Mikrowellenstrahlung ist. Der Abstand $d_3$ wird gemessen ausgehend von den Mittelpunkten $M_2$ des griffseitigen Endes 52 bis zum Mittelpunkt $M_4$ der Fallenöffnung 72, wobei beide Mittelpunkte auf derselben Rotationsachse $R_m$ liegen.

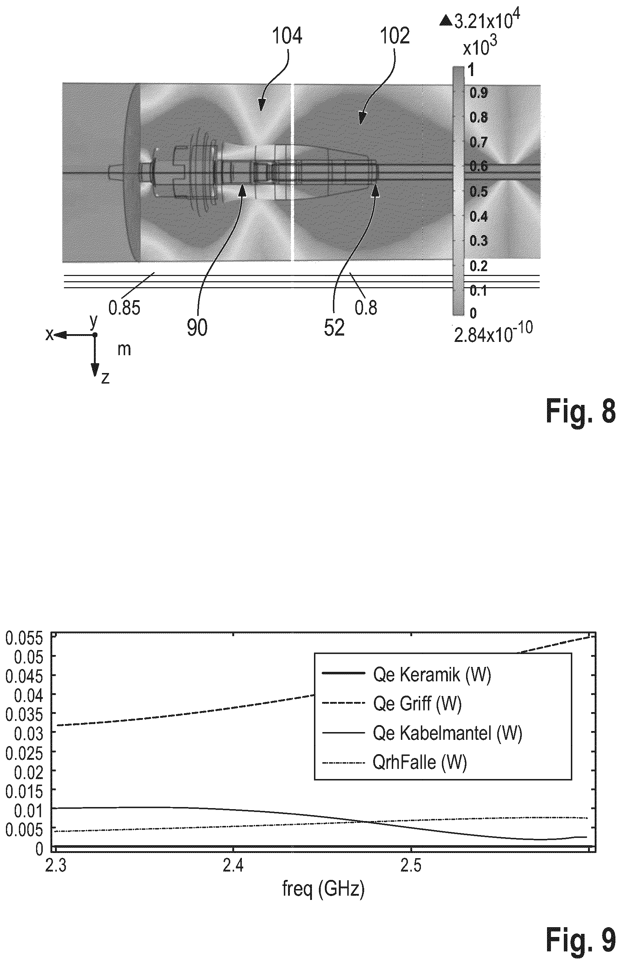

Der durch die Position der Kontaktstelle 90 erreichte geringere Wärmeübertrag beruht auf der durch Simulation des E-Feldes gewonnen Erkenntnissen, wie in den Figuren 8, 9 und 10 gezeigt ist.

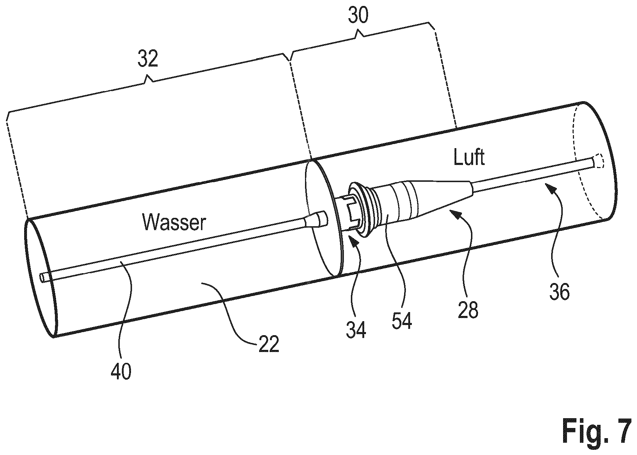

Das Simulationsmodell ist in Figur 7 gezeigt. In diesem Modell ist der Kerntemperaturfühler 28 zu erkennen, der mit seiner Messlanze 40 komplett in ein simuliertes Gargut eingesteckt ist, in dem Fall in ein Wassermedium als Gargutersatz. Die Einspeisung von Mikrowellenstrahlung erfolgt von rechts als eine koaxiale Mode zwischen Kabel 36 und der äußeren Randschicht (PEC für die Simulation). Links unten ist ein Port (am Boden des Wassers) der die auslaufenden Wellen absorbiert. Anhand dieser Simulation können die Verlustleistungsdichte im Griff 54 und elektrische Feldstärke bzw. Oberflächenströme berechnet werden.

In Fig. 8 ist ein Querschnitt entlang eines nicht-erfindungsgemäßen Kerntemperaturfühlers 28 gezeigt, bei dem das griffseitige Ende 52 einen Abstand d aufweist, der einer elektrischen Länge der Mikrowellenstrahlung im Griffabschnitt 30 entspricht, die größer als ein Viertel der Wellenlänge der im Kombinationsgargerät 10 verwendeten Mikrowellenstrahlung ist. Gezeigt ist das E-Feld, das an dem Wasser links reflektiert wird, analog dem Gargut 22. Die Intensität des E-Felds ist anhand einer Skala in V/m (auf Basis von den 1W Anregung) dargestellt, wobei hellere Bereiche 102 einem hohen E-Feld und dunklere Bereiche 104 einen geringeren E-Feld entsprechen.

Aus der Simulation in Fig. 8 ist zu erkennen, dass das griffseitige Ende 52 in einem Maximum des E-Feldes angeordnet ist. Dies ist nachteilig und führt zu höheren Strömen entlang des Kontaktierungsrohrs 50 und dem Griff 54, wodurch dieser einen besonders starken Energieeintrag durch das E-Feld erfährt.

Dies ist auch im Graphen in Fig. 9 wiedergegeben, der die aus der Simulation von Figur 9 gesammelten Daten zeigt. Erkennbar ist, dass sich der Griff 54 (obere Linie im Diagramm) einen besonders starken Energieeintrag im Vergleich zu den übrigen Komponenten erfährt.

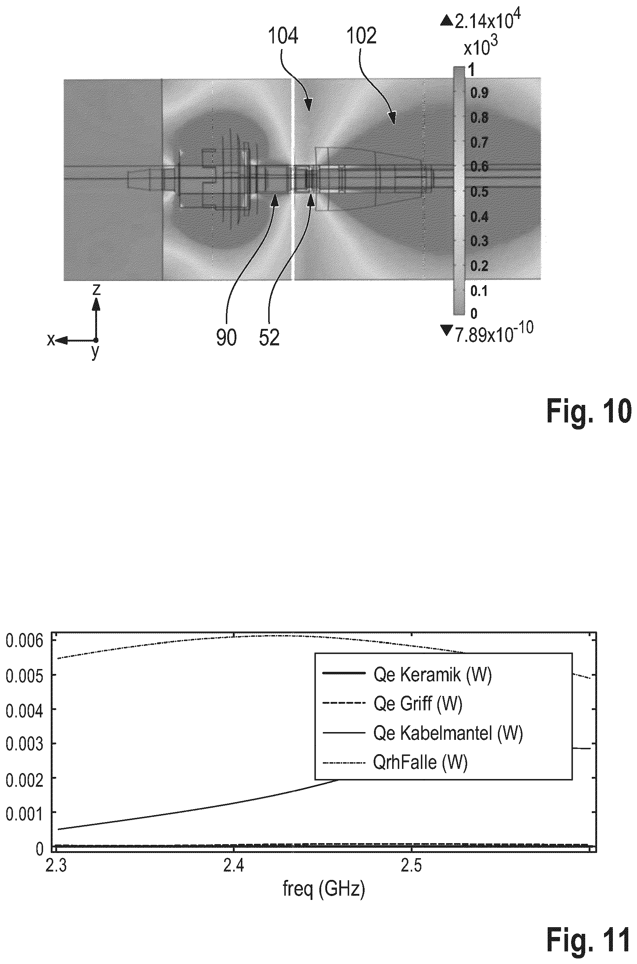

Fig. 10 zeigt die gleiche Simulation wie Fig. 8, mit dem Unterschied, dass das griffseitige Ende einen Abstand $d_1$ aufweist, der einer elektrischen Länge der Mikrowellenstrahlung im Griffabschnitt 30 entspricht, die kleiner als ein Viertel der Wellenlänge der im Kombinationsgargerät 10 verwendeten Mikrowellenstrahlung ist. Dadurch ist das griffseitige Ende 52 in einem Minimum des E-Feldes angeordnet.

Hierdurch erfährt der Griff 54 einen geringeren Energieeintrag im Vergleich zu der Anordnung des Griffs 54 aus Figur 9. Der Griff 54 erwärmt sich infolgedessen weniger.

Dies ist auch anhand von Figur 11 gezeigt, bei dem der Griff 54 im Vergleich zu den anderen Komponenten den geringsten Energieeintrag aufweist, und dieser ist im Vergleich zu Figur 9 auch um eine Größenordnung geringer.

**Patentansprüche**

1. Kerntemperaturfühler (28) für ein Kombinationsgargerät (10) zum Garen von Gargut (22), mit einem Messabschnitt (32) und einem Griffabschnitt (30),

   wobei ein Kontaktierungsrohr (50) vorgesehen ist, das sich zumindest teilweise in den Griffabschnitt (30) hinein erstreckt und ein griffseitiges Ende (52) hat, das dem Griffabschnitt (30) zugewandt ist, wobei in dem Kontaktierungsrohr (50) ein Kabel (36) geführt ist, das sich vom Griffabschnitt (30) aus in den Messabschnitt (32) hineinerstreckt, **dadurch gekennzeichnet, dass**

   das Kabel (36) im Griffabschnitt (30) einen entmantelten Bereich (88) aufweist, in dem das Kontaktierungsrohr (50) mit dem Kabel (36) eine Kontaktstelle (90) ausbildet, wobei die Kontaktstelle (90) zum griffseitigen Ende (52) einen Abstand $d_1$ aufweist, der einer elektrischen Länge der Mikrowellenstrahlung im Griffabschnitt (30) entspricht, die kürzer als oder gleich ein Viertel der Wellenlänge der im Kombinationsgargerät (10) verwendeten Mikrowellenstrahlung ist.

2. Kerntemperaturfühler (28) nach Anspruch 1, **dadurch gekennzeichnet, dass** der Kerntemperaturfühler (28) eine Mikrowellenfalle (34) hat, die einen topfförmigen Fallenabschnitt (64) aufweist, der eine zum Messabschnitt (32) ausgerichtete Fallenöffnung (72) hat und in Richtung des Griffabschnitts (30) einen mit einem zentralen Durchgang (76) versehenen Boden (68) aufweist, wobei durch den zentralen Durchgang (76) das Kontaktierungsrohr (50) verläuft, insbesondere wobei das Kontaktierungsrohr (50) an dem zentralen Durchgang (76) mit dem Boden (68) kontaktiert ist, weiter bevorzugt, dass das Kontaktierungsrohr (50) an dem zentralen Durchgang (76) mit dem Boden (68) laser-verschweißt ist.

3. Kerntemperaturfühler (28) nach Anspruch 1 oder 2, **dadurch gekennzeichnet, dass** an der Kontaktstelle (90) das Kontaktierungsrohr (50) eine Abschirmung (82) des Kabels (36) elektrisch leitend kontaktiert, wobei die Abschirmung (82) insbesondere eine Geflechtschirmung ist.

4. Kerntemperaturfühler (28) nach Anspruch 3, **dadurch gekennzeichnet, dass** das griffseitige Ende (52) des Kontaktierungsrohrs (50) in einem isolierten Bereich (92) des Kabels (36) angeordnet ist, in dem die Abschirmung (82) von einem äußeren Leitungsmantel (84) umgeben ist.

5. Kerntemperaturfühler (28) nach einem der Ansprüche 3 oder **4, dadurch gekennzeichnet, dass** im entmantelten Bereich (88) unter der Abschirmung (82) ein Gegendruckelement (98) angeordnet ist, das dazu eingerichtet ist, eine radial nach außen gerichtete Kraft auf die Abschirmung (82) auszuüben, sodass dieses nach außen gegen das Kontaktierungsrohr (50) gepresst ist, oder dass im entmantelten Bereich (88) über der Abschirmung (82) ein Presselement (99) angeordnet ist, das die Kontaktstelle (90) ausbildet, welche die Abschirmung (82) mit dem Kontaktierungsrohr (50) verbindet.

6. Kerntemperaturfühler (28) nach einem der Ansprüche 3 bis 5, **dadurch gekennzeichnet, dass** das Kontaktierungsrohr (50) die Abschirmung (82) oder das Presselement (99) an der Kontaktstelle (90) entlang des Umfangs der Abschirmung (82) oder des Presselements (99) im Wesentlichen vollständig berührt, sodass die Kontaktstelle (90) als ein durchgängiger Kontaktring ausgebildet ist.

7. Kerntemperaturfühler (28) nach einem der vorhergehenden Ansprüche, **dadurch gekennzeichnet, dass** die Kontaktstelle (90) durch eine radial nach innen gerichtete Wölbung (96) des Kontaktierungsrohrs (50) gebildet ist, wobei die Wölbung (96) insbesondere durch ein Rollieren des Kontaktierungsrohrs (50) auf das Kabel (36) hergestellt ist.

8. Kerntemperaturfühler (28) nach einem der vorhergehenden Ansprüche soweit rückbezogen auf Anspruch 2, **dadurch gekennzeichnet, dass** die Kontaktstelle (90) in einem minimalen Abstand $d_2$ vom Boden (68) entfernt angeordnet ist.

9. Kerntemperaturfühler (28) nach einem der vorhergehenden Ansprüche soweit rückbezogen auf Anspruch 2, **dadurch gekennzeichnet, dass** die Fallenöffnung (72) einen Abstand $d_3$ zum griffseitigen Ende (52) aufweist, der einer elektrischen Länge der Mikrowellenstrahlung im Griffabschnitt (30) entspricht, die kürzer als oder gleich ein Viertel der Wellenlänge der im Kombinationsgargerät (10) verwendeten Mikrowellenstrahlung ist.

10. Kombinationsgargerät (10) zum Garen von Gargut (22), mit einem Garraum (12), einem Mikrowellengenerator (18) und einer Steuereinheit (20), die mit einem im Garraum (12) vorgesehenen Kerntemperaturfühler (28) nach einem der vorhergehenden Ansprüche in Verbindung steht.

**Claims**

1. A core temperature detector (28) for a combination cooking appliance (10) for cooking a cooking product (22), comprising a measuring section (32) and a handle section (30),

    wherein a contacting tube (50) is provided which extends at least partially into the handle section (30) and has a handle-side end (52) facing the handle section (30), wherein a cable (36) extending from the handle section (30) into the measuring section (32) is guided in the contacting tube (50), **characterized in that** the cable (36) has an unsheathed area (88) in the handle section (30), in which the contacting tube (50) forms a contact point (90) along with the cable (36), wherein the contact point (90) has a distance $d_1$ to the handle-side end (52), which corresponds to an electrical length of the microwave radiation in the handle section (30), which is shorter than or equal to one quarter of the wavelength of the microwave radiation used in the combination cooking appliance (10).

2. The core temperature detector (28) according to claim 1, **characterized in that** the core temperature detector (28) has a microwave trap (34) which includes a pot-shaped trap section (64) having a trap opening (72) aligned with the measuring section (32) and a bottom (68) provided with a central passage (76) in the direction of the handle section (30), wherein the contacting tube (50) extends through the central passage (76), in particular wherein the contacting tube (50) is in contact with the bottom (68) at the central passage (76), more preferably **in that** the contacting tube (50) is laser-welded to the bottom (68) at the central passage (76).

3. The core temperature detector (28) according to claim 1 or 2, **characterized in that** the contacting tube (50) contacts a shielding (82) of the cable (36) in an electrically conductive manner at the contact point (90), wherein the shielding (82) is in particular a braided shielding.

4. The core temperature detector (28) according to claim 3, **characterized in that** the handle-side end (52) of the contacting tube (50) is arranged in an insulated area (92) of the cable (36), in which the shielding (82) is surrounded by an outer line sheath (84).

5. The core temperature detector (28) according to any of claims 3 or 4, **characterized in that** a counterpressure element (98) is arranged in the unsheathed area (88) below the shielding (82) and is designed to exert a radially outwardly directed force on the shielding (82), so that the latter is pressed outwardly against the contacting tube (50), or **in that** a pressure element (99) is arranged in the unsheathed area (88) above the shielding (82), which forms the contact point (90) connecting the shielding (82) to the contacting tube (50).

6. The core temperature detector (28) according to any of claims 3 to 5, **characterized in that** the contacting tube (50) substantially completely touches the shielding (82) or the pressure element (99) at the contact point (90) along the circumference of the shielding (82) or of the pressure element (99) so that the contact point (90) is formed as a continuous contact ring.

7. The core temperature detector (28) according to any of the preceding claims, **characterized in that** the contact point (90) is formed by a radially inwardly directed bulge (96) of the contacting tube (50), wherein the bulge (96) is produced in particular by rolling the contacting tube (50) onto the cable (36).

8. The core temperature detector (28) according to any of the preceding claims, if dependent on claim 2, **characterized in that** the contact point (90) is arranged at a minimum distance $d_2$ from the bottom (68).

9. The core temperature detector (28) according to any of the preceding claims, if dependent on claim 2, **characterized in that** the trap opening (72) has a distance $d_3$ to the handle-side end (52) which corresponds to an electrical length of the microwave radiation in the handle section (30), which is shorter than or equal to one quarter of the wavelength of the microwave radiation used in the combination cooking appliance (10).

10. A combination cooking appliance (10) for cooking a cooking product (22), comprising a cooking chamber (12), a microwave generator (18) and a control unit (20) which is in communication with a core temperature detector (28) according to any of the preceding claims which is provided in the cooking chamber (12).

## Revendications

1. Capteur de température à cœur (28) pour un appareil de cuisson mixte (10) pour la cuisson de produits à cuire (22), comprenant une partie de mesure (32) et une partie de poignée (30),

   un tube de mise en contact (50) étant prévu, lequel s'étend au moins partiellement dans la partie de poignée (30) et présente une extrémité (52) côté poignée tournée vers la partie de poignée (30), un câble (36) s'étendant de la partie de poignée (30) vers la partie de mesure (32) étant guidé dans le tube de mise en contact (50), **caractérisé en ce que**
   le câble (36) présente, dans la partie de poignée (30), une zone dénudée (88) dans laquelle le tube de mise en contact (50) forme ensemble avec le câble (36) un point de contact (90), le point de contact (90) présentant, par rapport à l'extrémité (52) côté poignée, une distance $d_1$ qui correspond à une longueur électrique du rayonnement micro-ondes dans la partie poignée (30), laquelle est inférieure ou égale à un quart de la longueur d'onde du rayonnement micro-ondes utilisé dans l'appareil de cuisson mixte (10).

2. Capteur de température à cœur (28) selon la revendication 1, **caractérisé en ce que** le capteur de température à cœur (28) comporte un piège à micro-ondes (34) qui présente une partie de piège (64) en forme de pot, laquelle comporte une ouverture de piège (72) orientée vers la partie de mesure (32) et qui présente, en direction de la partie de poignée (30), un fond (68) pourvu d'un passage central (76), le tube de mise en contact (50) s'étendant à travers le passage central (76), le tube de mise en contact (50) étant en particulier en contact avec le fond (68) au niveau du passage central (76), de manière plus préférée **en ce que** le tube de mise en contact (50) est en outre soudé au laser au fond (68) au niveau du passage central (76).

3. Capteur de température à cœur (28) selon la revendication 1 ou 2, **caractérisé en ce qu'**au niveau du point de contact (90), le tube de mise en contact (50) est en contact électriquement conducteur avec un blindage (82) du câble (36), le blindage (82) étant notamment un blindage tressé.

4. Capteur de température à cœur (28) selon la revendication 3, **caractérisé en ce que** l'extrémité (52) côté poignée du tube de mise en contact (50) est agencée dans une zone isolée (92) du câble (36), dans laquelle le blindage (82) est entouré d'une gaine extérieure (84).

5. Capteur de température à cœur (28) selon l'une des revendications 3 ou 4, **caractérisé en ce que**, dans la zone dénudée (88) sous le blindage (82), est agencé un élément de contrepression (98) qui est aménagé de manière à exercer une force dirigée radialement vers l'extérieur sur le blindage (82) de sorte que celui-ci est pressé vers l'extérieur contre le tube de mise en contact (50), ou
   **en ce qu'**un élément de pression (99) est agencé dans la zone dénudée (88) au-dessus du blindage (82), lequel forme le point de contact (90) reliant le blindage (82) au tube de mise en contact (50).

6. Capteur de température à cœur (28) selon l'une des revendications 3 à 5, **caractérisé en ce que** le tube de mise en contact (50) touche sensiblement entièrement le blindage (82) ou l'élément de pression (99) au niveau du point de contact (90) le long de la circonférence du blindage (82) ou de l'élément de pression (99), de sorte que le point de contact (90) est réalisé sous forme d'anneau de contact continu.

7. Capteur de température à cœur (28) selon l'une des revendications précédentes, **caractérisé en ce que** le point de contact (90) est formé par un bombement (96) du tube de mise en contact (50) dirigé radialement vers l'intérieur, le bombement (96) étant notamment réalisé par un roulage du tube de mise en contact (50) sur le câble (36).

8. Capteur de température à cœur (28) selon l'une des revendications précédentes, dans la mesure où elle dépend de la revendication 2, **caractérisé en ce que** le point de contact (90) est agencé à une distance minimale $d_2$ du fond (68).

9. Capteur de température à cœur (28) selon l'une des revendications précédentes, dans la mesure où elle dépend de la revendication 2, **caractérisé en ce que** l'ouverture de piège (72) présente une distance $d_3$ par rapport à l'extrémité (52) côté poignée, qui correspond à une longueur électrique du rayonnement micro-ondes dans la partie de poignée (30), laquelle est inférieure ou égale à un quart de la longueur d'onde du rayonnement micro-ondes utilisé dans l'appareil de cuisson mixte (10).

10. Appareil de cuisson mixte (10) pour la cuisson de produits à cuire (22), comprenant un espace de cuisson (12), un générateur de micro-ondes (18) et une unité de commande (20) qui est reliée à un capteur de température à cœur (28) selon l'une des revendications précédentes qui est prévu dans l'espace de cuisson (12).

Fig. 1

Fig. 2

**Fig. 3**

**Fig. 4**

Fig. 5

Fig. 6A

Fig. 6B

32    30

Wasser    Luft

40    22    34    54    28    36

Fig. 7

**Fig. 8**

freq (GHz)

**Fig. 9**

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020104743 A1